# EUROPEAN PATENT APPLICATION

(11) **EP 1 802 109 A2**
(43) Date of publication of application: **27.06.2007**
(21) Application number: 06018540.2
(22) Date of filing: 05.09.2006
(51) Int. Cl.: H04N 5/445

(54) **Digital broadcasting reception apparatus and method for displaying broadcasting channel information using the same**

(30) Priority: 20.12.2005 KR 20050126074
(71) Applicant: Samsung Electronics Co., Ltd., Suwon-si, Gyeonggi-Do (KR)
(72) Inventor: Lee, Gun-Su, Yeongtong-gu Suwon-si, Gyeonggi-do (KR); Roh, Ho-Hyun, Yeongtong-gu Suwon-si, Gyeonggi-do (KR)
(74) Representative: Lang, Johannes

(57) **Abstract**

A method for displaying broadcasting channel information in a digital broadcasting reception apparatus includes receiving and storing digital broadcasting program guidance data including image information for digital broadcasting programs; generating a broadcasting program list including image information for digital broadcasting programs according to channels when a request for broadcasting channel information is received from a user, by means of the digital broadcasting program guidance data; and displaying the broadcasting program list according to channels, which includes the image information. In the method, it is possible to provide users with graphic-based broadcasting channel information instead of text-based broadcasting channel information. In the method, broadcasting channel information is provided to users together with contents of preview dynamic images or still images for digital broadcasting programs, so that the users view image information for broadcasting programs in advance.

## Description

### BACKGROUND OF THE INVENTION

### 1. Field of the Invention

The present invention relates to a digital broadcasting reception apparatus, and more particularly to a digital broadcasting reception apparatus and a method for displaying broadcasting channel information using the same.

### 2. Description of the Related Art

Typically, digital broadcasting substitutes for conventional analog broadcasting and provides users with services of high picture and speech quality. Further, a digital broadcasting reception apparatus includes a mobile communication terminal, a vehicle receiver, a home receiver, etc., which may be installed at a wireless terminal.

Recently, with the development of digital broadcasting technology and mobile communication technology, interest in a digital broadcasting service in which a user can watch digital broadcasting while moving has increased. Specifically, interest in a Digital Multimedia Broadcasting (DMB) service using a mobile communication terminal has increased. A DMB service represents a service in which a user can watch multimedia broadcasting through multiple channels by means of a personal wireless receiver or a vehicle receiver, which is equipped with a non-directional receiver antenna, while moving.

One of the advantages of such a digital broadcasting service is that it provides channel efficiency superior to that of an analog broadcasting service. That is, in analog broadcasting, only one program exists in one physical channel. However, in digital broadcasting, it is possible to simultaneously transfer a plurality of programs through one physical channel. Therefore, a digital broadcasting service can provide many programs. Accordingly, it is necessary to provide program information for allowing viewers to easily select desired programs. For this, an Electronic Program Guide (EPG) service has been made.

An EPG service informs users of information (digital broadcasting program guidance data) regarding the type of a currently provided broadcasting program, the type of a broadcasting channel, and a beginning time and an ending time of a broadcasting program to be provided later.

Digital broadcasting program guidance data, which a broadcasting center or a broadcasting station transmits within a specific period, include titles and simple characteristics of a broadcasting program transmitted based on time zones according to each channel. Accordingly, a digital broadcasting reception apparatus receives the digital broadcasting program guidance data, stores the received digital broadcasting program guidance data in a memory, generates digital broadcasting program information, and provides users with the generated digital broadcasting program information.

However, because the digital broadcasting program data provide only text-based information such as a broadcasting program name, a channel name (e.g. a channel number) and broadcasting time information, the digital broadcasting program data cannot provide users with image information for broadcasting programs, e.g. thumbnail images of preview dynamic images or still images.

### SUMMARY OF THE INVENTION

Accordingly, the present invention has been made to solve the above-mentioned problems occurring in the prior art, and it is an object of the present invention to provide a digital broadcasting reception apparatus and a method for displaying broadcasting channel information using the same, the broadcasting channel information including image information.

In order to accomplish the aforementioned object, according to one aspect of the present invention, there is provided a method for displaying broadcasting channel information in a digital broadcasting reception apparatus, the method including receiving and storing digital broadcasting program guidance data including image information for digital broadcasting programs, generating a broadcasting program list including image information for digital broadcasting programs by means of the digital broadcasting program guidance data when a request for broadcasting channel information is received from a user, and displaying the broadcasting program list including the image information according to channels.

In order to accomplish the aforementioned object, according to another aspect of the present invention, there is provided a method for displaying broadcasting channel information in a digital broadcasting reception apparatus, the method including receiving and storing digital broadcasting program guidance data including image information for digital broadcasting programs; generating a broadcasting program list according to channels broadcasted at a current time by means of the digital broadcasting program guidance data when a request for broadcasting channel information is received from a user during output of digital broadcasting; and displaying the generated broadcasting program list according to channels on a digital broadcasting output screen together with the image information.

In order to accomplish the aforementioned object, according to a further aspect of the present invention, there is provided a digital broadcasting reception apparatus including a digital broadcasting receiver for receiving both digital broadcasting data and digital broadcasting program guidance data including image information of the digital broadcasting data; a memory for storing the digital broadcasting program guidance data; a controller for generating a broadcasting program list including image information for digital broadcasting guidance data according to channels by means of the digital broadcasting program guidance data; and an output unit for displaying the broadcasting program list including the image information according to channels.

### BRIEF DESCRIPTION OF THE DRAWINGS

The above and other objects, features and advantages of the present invention will be more apparent from the following detailed description taken in conjunction with the accompanying drawings, in which:
FIG. 1 is a diagram schematically illustrating the construction of a digital broadcasting system according to the present invention;
FIG. 2 is a block diagram illustrating the construction of a digital broadcasting reception apparatus according to the present invention;
FIG. 3 is a flow diagram illustrating the operation process of a digital broadcasting reception apparatus according to the present invention;
FIG. 4 is a flow diagram illustrating in detail an operation for detecting digital broadcasting program guidance data according to channels in the operation process of FIG. 3;
FIGs. 5A and 5B are flow diagrams illustrating the operation process of a digital broadcasting reception apparatus according to the present invention; and
FIGs. 6A to 6E are diagrams illustrating the operation process of a digital broadcasting reception apparatus according to the present invention.

### DETAILED DESCRIPTION OF THE PREFERRED EMBODIMENT

Hereinafter, a preferred embodiment according to the present invention will be described with reference to the accompanying drawings. The same reference numerals are used to designate the same elements as those shown in other drawings. In the following description, a detailed description of known functions and configurations incorporated herein will be omitted when it may obscure the subject matter of the present invention.

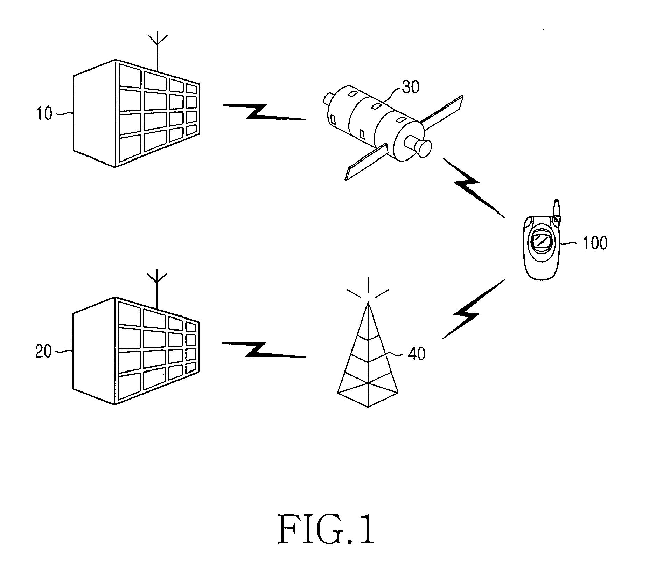

FIG. 1 is a diagram schematically illustrating the construction of a digital broadcasting system according to the present invention.

The digital broadcasting system includes broadcasting stations 10 and 20 for converting multimedia data to digital broadcasting data for broadcasting, and periodically transmitting digital broadcasting program guidance data including image information, and a digital broadcasting reception apparatus 100 for receiving the digital broadcasting data so as to output multimedia data, and receiving the digital broadcasting program guidance data so as to provide users with broadcasting channel information. Further, the digital broadcasting system according to the present invention may also include a separate server for transmitting the digital broadcasting program guidance data.

The digital broadcasting data transmitted from the satellite broadcasting station 10 are transferred to the digital broadcasting reception apparatus 100 through a satellite 30, and the digital broadcasting data transmitted from the terrestrial broadcasting station 20 are transferred to the digital broadcasting reception apparatus 100 through a terrestrial repeater 40. The digital broadcasting program guidance data include image information, and the image information may include thumbnail images of still images or dynamic images for each digital broadcasting program, etc.

Hereinafter, a method by the broadcasting stations 10 and 20 to insert image information into the digital broadcasting program guidance data will be described.

Usually, the digital broadcasting program guidance data include various fields constructed by program names, channel numbers, channel names, etc., according to each time zone and each channel. The broadcasting stations 10 and 20 add fields to the digital broadcasting program guidance data, thereby inserting the image information into the digital broadcasting program guidance data.

That is, when generating the digital broadcasting program guidance data, each of the broadcasting stations 10 and 20 captures still images or dynamic images of broadcasting programs of each channel after a predetermined time period, compresses the captured still images or dynamic images into an JPEG file or an MPEG file, and inserts the JPEG file or the MPEG file into the added field. Accordingly, when the digital broadcasting program guidance data including the image information are received, the digital broadcasting reception apparatus 100 searches for the added field, thereby detecting the image information.

Each of the broadcasting stations 10 and 20 transmits the digital broadcasting program guidance data including the image information either in each predetermined cycle or whenever the image information is updated. Further, when a transmission request is received from the digital broadcasting reception apparatus 100, each of the broadcasting stations 10 and 20 may transmit the digital broadcasting program guidance data including the image information.

The digital broadcasting reception apparatus 100 includes both a vehicle digital broadcasting reception terminal and a portable digital broadcasting reception terminal.

The digital broadcasting reception apparatus 100 receives and stores the digital broadcasting program guidance data, detects the image information included in the digital broadcasting program guidance data when a request for broadcasting channel information is received from a user, and displays the detected image information together with the broadcasting channel information. In other words, the digital broadcasting reception apparatus 100 provides a user with graphics-based broadcasting channel information instead of text-based broadcasting channel information.

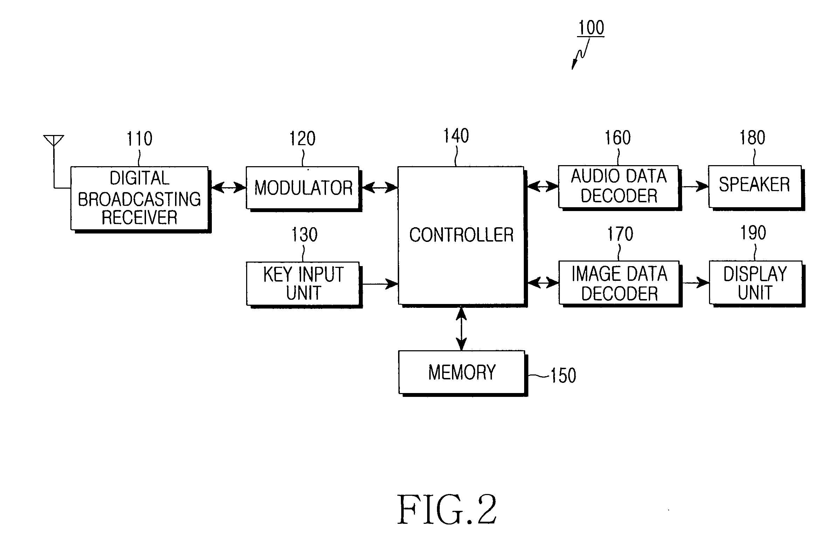

FIG. 2 is a block diagram illustrating the construction of the digital broadcasting reception apparatus according to the present invention.

Referring to FIG. 2, the digital broadcasting reception apparatus 100 includes a digital broadcasting receiver 110, a modulator 120, a key input unit 130, a controller 140, a memory 150, an audio data decoder 160, an image data decoder 170, a speaker 180 and a display unit 190. The speaker 180 and the display unit 190 each function as an output unit.

The digital broadcasting receiver 110 receives digital broadcasting program guidance data and digital broadcasting data of a predetermined channel under the control of the controller 140, and outputs the digital broadcasting data to the modulator 120. The digital broadcasting program guidance data includes image information, which may be included in the digital broadcasting data and received.

The modulator 120 modulates the digital broadcasting data received in the digital broadcasting receiver 110 into digital data streams, and outputs the digital data streams to the controller 140.

The key input unit 130 includes character keys, number keys, various function keys, etc., and outputs key input signals corresponding to a key input by a user to the controller 140.

The controller 140 controls the general operation of the digital broadcasting reception apparatus 100. The controller 140 parses the digital broadcasting streams output from the modulator 120 into audio data streams and image data streams, and outputs the audio data streams and the image data streams to the speaker 180 and the display unit 190 through the audio data decoder 160 and the image data decoder 170, respectively.

When a request for broadcasting channel information is received from a user, the controller 140 generates a broadcasting program list including image information for digital broadcasting programs according to channels from the digital broadcasting program guidance data, and controls the display unit 190 to display the generated broadcasting program list according to channels. When generating the broadcasting program list according to channels, it is preferred that the controller 140 generates a digital broadcasting program list, including broadcasting time information with a time when the broadcasting channel information has been requested, according to channels from the digital broadcasting program guidance data. Further, the controller 140 checks if the digital broadcasting program guidance data correspond to updated data before generating the digital broadcasting program list according to channels. If the digital broadcasting program guidance data do not correspond to the updated data, it is further preferred to update the digital broadcasting program guidance data.

In order to update the digital broadcasting program guidance data including the image information, the controller 140 receives the digital broadcasting program guidance data after a predetermined time period (e.g. x number of days, y number of weeks, etc.) or at a user's request, and stores the received digital broadcasting program guidance data in the memory 150. The controller 140 scans each digital broadcasting channel after the predetermined time period, captures still images or dynamic images of a digital broadcasting program of the scanned channel, and may also update the image information of the digital broadcasting program guidance data stored in the memory 150 by means of the captured still images or dynamic images. This prevents the entire digital broadcasting program guidance data from being unnecessarily received when updating only the image information.

The broadcasting program list according to channels including the image information can include at least one of a channel name, a program name, a broadcasting time and detailed information. That is, when displaying the broadcasting program list according to channels, the controller 140 may display at least one of the channel name, the program name, the broadcasting time and the detailed information, in addition to the image information.

If a predetermined channel of the broadcasting program list according to channels displayed on the display unit 190 is selected, the controller 140 outputs a broadcasting program of the selected channel through the output unit, i.e. the speaker 180 and/or the display unit 190. Herein, the controller 140 may also display detailed information of the broadcasting program through the output unit before outputting the broadcasting program. In this case, if a confirmation key is input by a user having checked the detailed information, it is preferred that the controller 140 outputs the broadcasting program of the selected channel through the output unit, i.e. the speaker 180 and/or the display unit 190.

Further, if a request for broadcasting channel information is received from a user during output of digital broadcasting, the controller 140 generates a broadcasting program list according to channels broadcasted at the current time from the digital broadcasting program guidance data, and controls the display unit 190 to display the generated broadcasting program list according to channels on a digital broadcasting output screen together with the image information.

If a predetermined channel of the displayed broadcasting program list according to channels is selected, the controller 140 controls the display unit 190 to display a broadcasting program, which is currently broadcasted through the selected channel, on a predetermined sub-screen of the digital broadcasting output screen. Preferably, the existing output digital broadcasting output screen corresponds to a main screen. The main screen and the sub-screen may be output through either an On-Screen-Display (OSD) scheme or a Picture-In-Picture (PIP) scheme.

If a channel of the broadcasting program displayed on the sub-screen is selected while the broadcasting programs of different channels are displayed on the main screen and the sub-screen, the controller 140 can control the display unit 190 to display the broadcasting program of the selected channel on the main screen. In this case, it is preferred that the existing broadcasting program displayed on the main screen is displayed on the sub-screen.

If a channel of the broadcasting program displayed on the main-screen is selected while the broadcasting programs of different channels are displayed on the main screen and the sub-screen, it is preferred that the controller 140 controls the display unit 190 to display the broadcasting program of the selected channel on the entire screen of the display unit 190.

Further, if a request for broadcasting information of channels before or after a channel on the air is received from a user during output of digital broadcasting, the controller 140 can detect image information of digital broadcasting programs of the channels before or after the channel on the air from the digital broadcasting program list according to channels, and control the display unit 190 to display the detected image information at a predetermined position of the digital broadcasting output screen. It is preferred that the controller 140 periodically updates and displays the displayed image information.

The memory 150 may include a program memory and a data memory, and stores both various information necessary for controlling the operation of the digital broadcasting reception apparatus 100 and various information selected based on user selection information. That is, the memory 150 may include a Read-Only Memory (ROM) for storing an operation algorithm accessed by the controller 140 for the general operation of the digital broadcasting reception apparatus 100, and a Random Access Memory (RAM) for storing data by control commands in the data processing process of the controller 140. Further, the memory 150 stores the digital broadcasting program guidance data including the image information received in the digital broadcasting receiver 110.

The audio data decoder 160 receives the audio data stream under the control of the controller 140, decodes the received audio data stream into analog audio signals, and outputs the analog audio signals to the speaker 180.

The image data decoder 170 receives the image data stream under the control of the controller 140, decodes the received image data stream into analog image signals, and outputs the analog image signals to the display unit 190. Each of the speaker 180 and the display unit 190 can function as an output unit in the digital broadcasting reception apparatus 100.

The display unit 190 may include a Liquid Crystal Display (LCD), etc., and displays both various display data generated in the digital broadcasting reception apparatus 100 and the digital broadcasting output screen decoded by the video processor. When the LCD includes a touch screen function, the display unit 190 may also operate as an input unit.

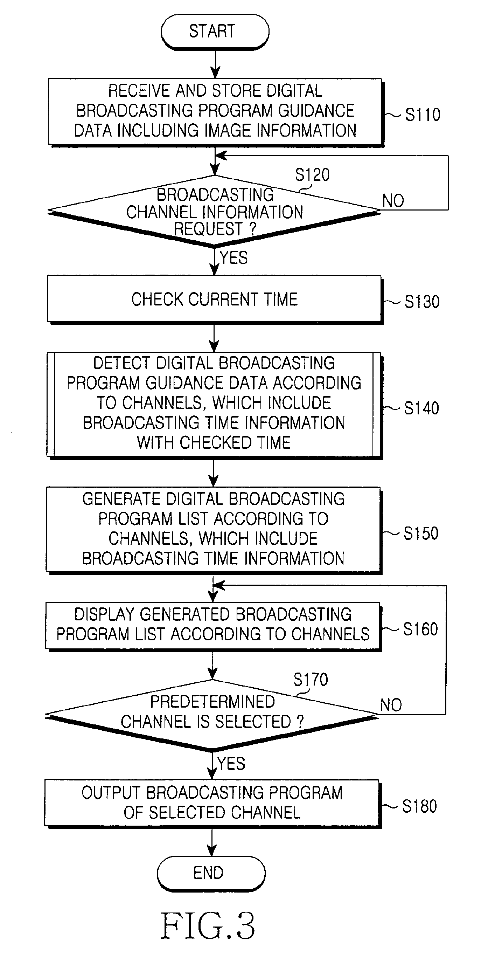

FIG. 3 is a flow diagram illustrating the operation process of the digital broadcasting reception apparatus according to the present invention.

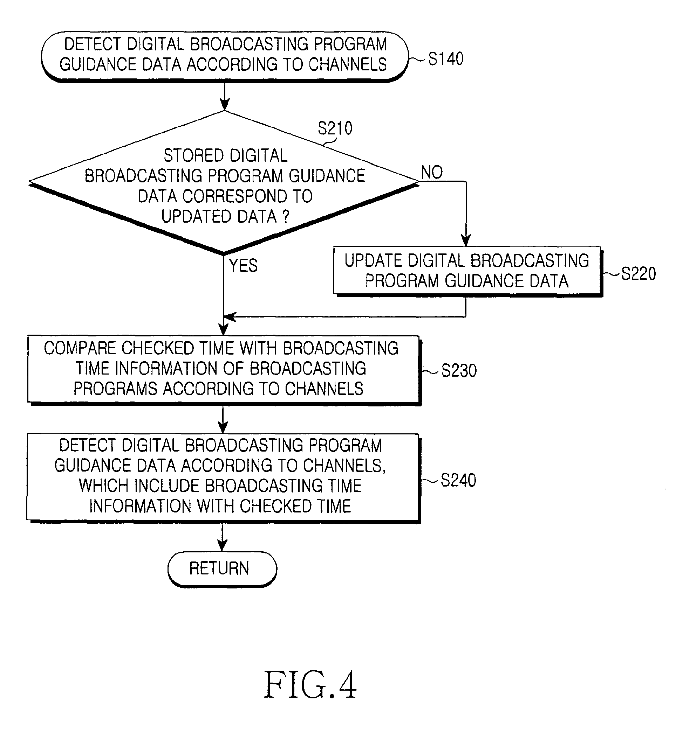

FIG. 4 is a flow diagram illustrating in detail an operation for detecting the digital broadcasting program guidance data according to channels in the operation process of FIG. 3. FIG. 4 illustrates in detail step S140 of FIG. 3.

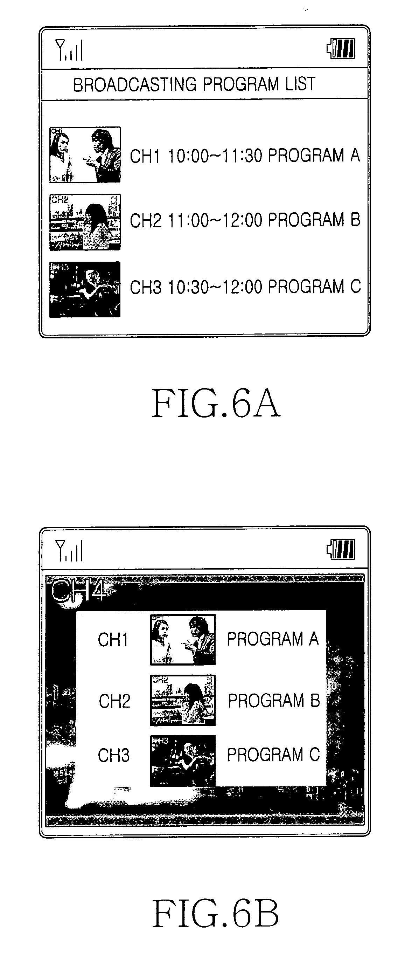

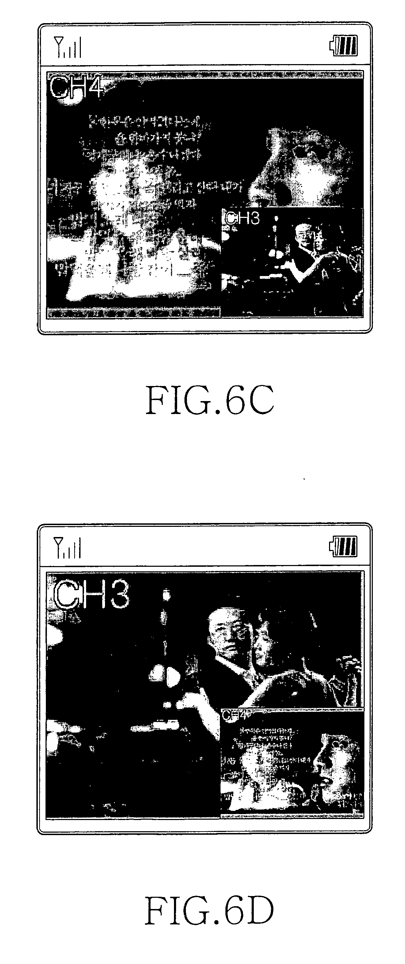

FIGs. 6A to 6E are diagrams illustrating the operation process of the digital broadcasting reception apparatus according to the present invention.

Referring to FIGs. 2 and 3, the controller 140 receives and stores the digital broadcasting program guidance data including image information (S110). The image information includes thumbnail images of still images or dynamic images for each digital broadcasting program. The controller 140 receives the digital broadcasting program guidance data including the image information in each predetermined cycle or whenever a request is received from a user, and stores the received digital broadcasting program guidance data in the memory 150. The controller 140 checks if a request for broadcasting channel information is received from the user (S120). The user may request the broadcasting channel information by inputting a separate key (e.g. an EPG key) of the key input unit 130, or request the broadcasting channel information through menu key input. If the request for the broadcasting channel information is received from the user, the controller 140 checks the current time (S130). The controller 140 may include a separate timer for measuring a time.

The controller 140 detects digital broadcasting program guidance data according to channels, which include broadcasting time information with the checked time, from the digital broadcasting program guidance data stored in the memory 150 (S140). The controller 140 generates a digital broadcasting program list according to channels, which includes the broadcasting time information with the checked time, from the detected digital broadcasting program guidance data according to channels (S150). The generated broadcasting program list according to channels includes image information for each digital broadcasting program.

The controller 140 displays the generated broadcasting program list according to channels on the display unit 190 (S160). When displaying the broadcasting program list according to channels, the controller 140 can display at least one of a channel name, a program name, a broadcasting time and detailed information in addition to the image information as illustrated in FIG. 6A. The screen of FIG. 6A includes the image information (e.g. thumbnail images) for digital broadcasting programs of each channel, the channel name, the broadcasting time and the program name. The broadcasting time may be included in the detailed information. For example, the detailed information may include a brief description of a corresponding program, a representative performer, a supervisor, a rating, etc.

The controller 140 checks if a predetermined channel is selected from the broadcasting program list according to channels (S170). A user may select a desired channel by inputting a direction key or a number key. If a predetermined channel is selected based on selection information of a user, the controller 140 outputs a broadcasting program of the selected channel (S180). For example, if a predetermined channel is selected from the screen of FIG. 6A, the controller 140 outputs the broadcasting program of the selected channel through an output unit.

Referring to FIGs. 2 and 4, the controller 140 checks the current time in step 130 of FIG. 3, and determines if the digital broadcasting program guidance data stored in the memory 150 correspond to updated data (S210).

As a result of the determination, if the digital broadcasting program guidance data do not correspond to the updated data, the controller 140 updates the digital broadcasting program guidance data (S220). In this case, the controller 140 may update the digital broadcasting program guidance data in one of the following two ways.

In the first way, a request for the digital broadcasting program guidance data is transmitted to a broadcasting station or a separate server, and then the latest digital broadcasting program guidance data are received and updated.

In the second way, the controller 140 scans each digital broadcasting channel in each predetermined cycle, captures still images or dynamic images of broadcasting programs of the scanned channels, and updates only image information of the digital broadcasting program guidance data by means of the captured still images or dynamic images. When the second way is used, it is possible to prevent digital broadcasting program guidance data of an unchanged version from being unnecessarily received.

The controller 140 compares the checked time with broadcasting time information of broadcasting programs according to channels included in the digital broadcasting program guidance data (S230). From among a Network Information Table (NIT), a Broadcaster Information Table (BIT), a Service Description Table (SDT) and an Event Information Table (EIT), which belong to table information constituting digital broadcasting program guidance data, it is preferred to use the EIT.

The NIT includes information relating to a satellite and a network name, and the BIT is used in order to transmit broadcasting station information. The broadcasting station information includes an announcement, a broadcasting station name, the current channel list, etc. The SDT is used in order to transmit each channel information, which includes information representing names of organized channels, a consignment broadcaster name, Uniform Resource Locator (URL) information for channels, a channel type, etc. Further, the EIT represents information of each program, which includes a channel number, a program name, program URL information, broadcasting time information of programs, a brief description of programs, etc.

Accordingly, in order to compare the checked time with the broadcasting time information of the broadcasting programs according to channels included in the digital broadcasting program guidance data and detect digital broadcasting program guidance data according to channels, which include broadcasting time information with the checked time, it is preferred to use the EIT including broadcasting time information of a predetermined broadcasting program.

As a result of the comparison, the controller 140 detects the digital broadcasting program guidance data according to channels, which include the broadcasting time information with the checked time, from the digital broadcasting program guidance data (S240).

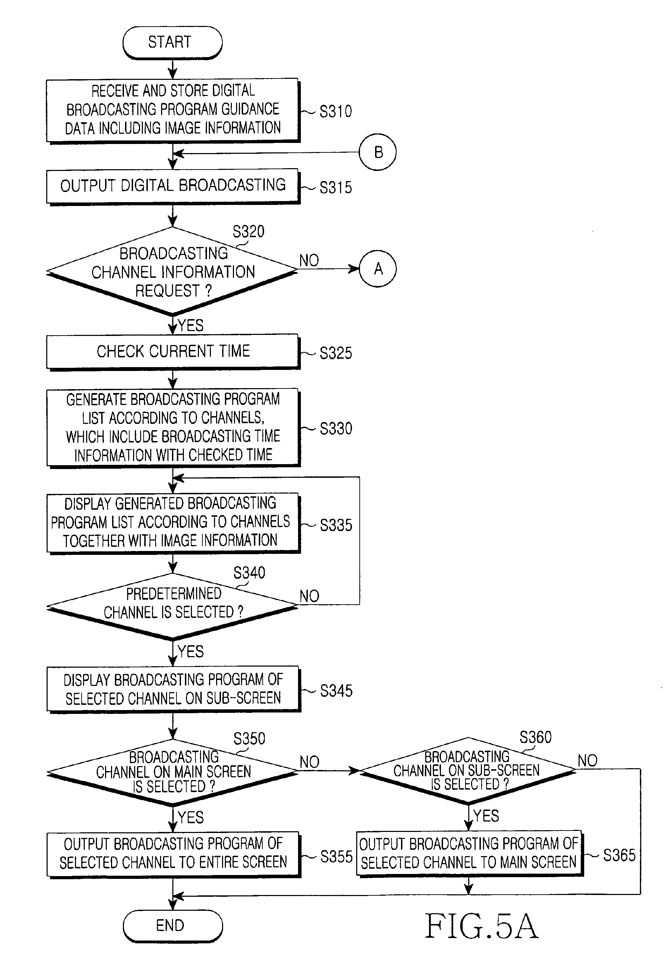

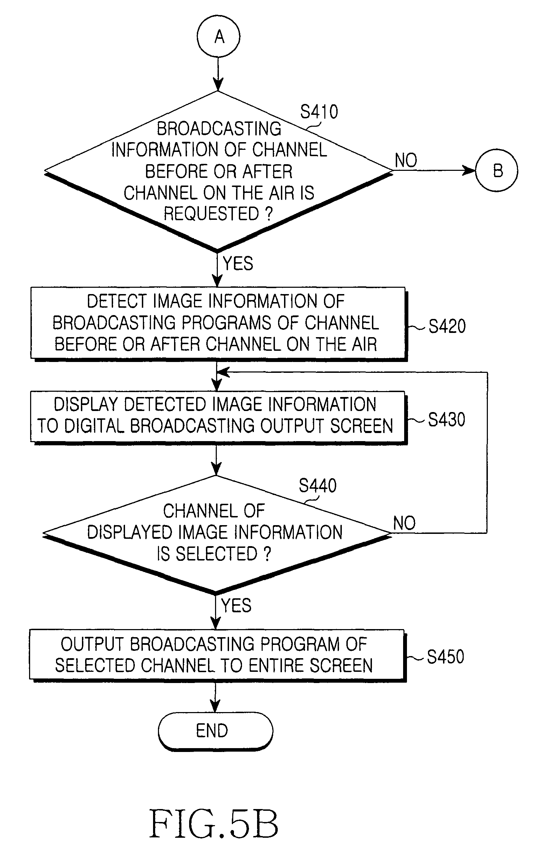

FIGs. 5A and 5B are flow diagrams illustrating the operation process of the digital broadcasting reception apparatus according to the present invention.

Referring to FIGs. 2, 5A and 5B, the controller 140 receives digital broadcasting program guidance data including image information and stores the received digital broadcasting program guidance data in the memory 150 (S310). It is preferred to receive the digital broadcasting program guidance data through the digital broadcasting receiver 110. However, in a case in which the digital broadcasting reception apparatus includes a wireless transceiver, it is also possible to receive the digital broadcasting program guidance data through the wireless transceiver.

The controller 140 receives digital broadcasting data of a corresponding channel through the digital broadcasting receiver 110 in response to a broadcasting output request of a user, and outputs the received digital broadcasting data (S315).

The controller 140 checks if a request for broadcasting channel information is received from the user during output of digital broadcasting (S320). The request for the broadcasting channel information represents a request for information of all broadcasting channels on the air. If the request for the broadcasting channel information is received from the user, the controller 140 checks the current time (S325). The controller 140 may include a separate timer for measuring a time.

The controller 140 generates a broadcasting program list according to channels, which includes broadcasting time information with the checked time (S330). The broadcasting program list according to channels includes image information for each digital broadcasting program. Since a process for generating the broadcasting program list according to channels is described in detail with reference to FIGs. 3 and 4, details will be omitted at this time.

The controller 140 displays the generated broadcasting program list according to channels on the display unit 190 together with image information (S335). That is, when displaying the broadcasting program list according to channels, the controller 140 can display at least one of a channel name, a program name, a broadcasting time and detailed information in addition to the image information as illustrated in FIG. 6B.

In the meantime, when displaying the broadcasting program list according to channels at a predetermined position of a digital broadcasting output screen, the controller 140 can display the broadcasting program list according to channels through either an OSD scheme or a PIP scheme.

The controller 140 checks if a predetermined channel is selected from the displayed broadcasting program list according to channels (S340). A user may select a desired channel by inputting a direction key or a number key. If a predetermined channel is selected based on selection information of a user, the controller 140 displays a broadcasting program of the selected channel on a predetermined sub-screen of the digital broadcasting output screen (S345). For example, if Channel 3 is selected while the broadcasting program of an existing channel 4 is displayed on the screen of FIG. 6B, the digital broadcasting of Channel 4 is displayed on a main screen, and the digital broadcasting of the selected Channel 3 is displayed on a sub-screen. The main screen and the sub-screen may be output through either an OSD scheme or a PIP scheme.

When the two digital broadcasting programs are output through the main screen and the sub-screen, the controller 140 checks if a broadcasting channel on the main screen is selected (S350). If the channel of the broadcasting program displayed on the main screen is selected while the broadcasting programs of different channels are displayed on the main screen and the sub-screen respectively, the controller 140 outputs the broadcasting program of the selected channel to the entire screen of the display unit 190 (S355). If the broadcasting channel on the main screen is not selected in step 350, the controller 140 checks if a broadcasting channel on the sub-screen is selected (S360).

If the channel of the broadcasting program displayed on the sub-screen is selected while the broadcasting programs of different channels are displayed on the main screen and the sub-screen respectively, the controller 140 outputs the broadcasting program of the selected channel to the main screen (S365). For example, if Channel 3 (sub-screen channel) is selected from the screen of FIG. 6C, the broadcasting program of Channel 3 is displayed on the main screen, and the broadcasting program of Channel 4, which has been displayed on the main screen, is displayed on the sub-screen.

In the meantime, if there is no request for information for any broadcasting channels on the air, the controller 140 checks if there exists a request for broadcasting information of channels before or after the channel on the air (S410). In other words, a user can request broadcasting information of one of the channels before or after the channel on the air or request all broadcasting information of the channels before or after the channel on the air. However, if a request for broadcasting information of channels before or after the channel on the air is received from a user during output of digital broadcasting, the controller 140 detects image information of the digital broadcasting programs of the channels before or after the channel on the air from the digital broadcasting program list according to channels (S420).

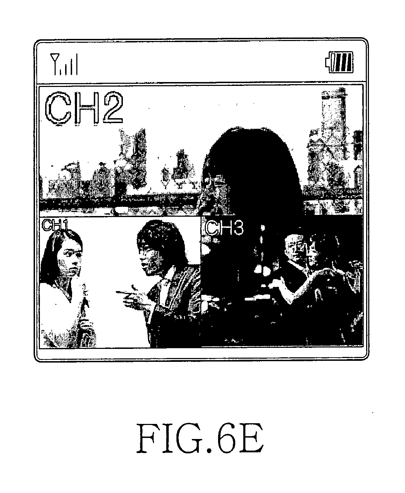

The controller 140 outputs the detected image information to a predetermined position of the digital broadcasting output screen (S430). That is, the controller 140 can output the image information of the broadcasting programs of the channels before or after the channel on the air through the sub-screen. In other words, the controller 140 can output the image information of the channels before or after the channel on the air as illustrated in FIG. 6E. It is preferred that the controller 140 periodically updates the output image information in each predetermined cycle (e.g. five or ten minutes) and outputs the updated image information.

The controller 140 checks if a channel of the displayed image information is selected (S440). If the channel of the displayed image information is selected based on selection information of a user, the controller 140 outputs the broadcasting program of the selected channel to the entire screen of the display unit 190 (S450).

The present invention as described above provides both a digital broadcasting reception apparatus for displaying broadcasting channel information including image information and a method using the digital broadcasting reception apparatus, so that it is possible to provide users with graphics-based broadcasting channel information instead of text-based broadcasting channel information.

Further, the present invention as described above provides users with broadcasting channel information together with contents of preview dynamic images or still images for digital broadcasting programs, so that the users view image information for broadcasting programs in advance.

Furthermore, according to the present invention, when a user watches digital broadcasting, the user can check image information of broadcasting programs of channels before or after the channel on the air without separately performing a channel switching.

Although a preferred embodiment of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for displaying broadcasting channel information in a digital broadcasting reception apparatus, the method comprising the steps of:
receiving and storing digital broadcasting program guidance data including image information for digital broadcasting programs;
when a request for broadcasting channel information is received from a user, generating a broadcasting program list including image information for digital broadcasting programs according to channels by means of the digital broadcasting program guidance data; and
displaying the broadcasting program list including the image information according to channels.

2. The method as claimed in claim 1, wherein the image information includes thumbnail images of still images or dynamic images for each digital broadcasting program.

3. The method as claimed in claim 1, wherein the broadcasting program list according to channels, which includes the image information, includes at least one of a channel name, a program name, a broadcasting time and detailed information.

4. The method as claimed in claim 1, wherein, in the receiving and storing step, the digital broadcasting program guidance data including the image information are received and stored in each predetermined cycle.

5. The method as claimed in claim 1, wherein, in the receiving and storing step, the digital broadcasting program guidance data including the image information are received and stored at a user's request.

6. The method as claimed in claim 1, wherein the generating step further comprises:
checking a current time when the request for the broadcasting channel information is received from the user;
detecting digital broadcasting program guidance data, including broadcasting time information with the checked time, according to channels from the previously stored digital broadcasting program guidance data; and
generating the broadcasting program list, including the broadcasting time information with the checked time, according to channels by means of the digital broadcasting program guidance data according to channels.

7. The method as claimed in claim 6, wherein the detecting step further comprises:
comparing the checked time with broadcasting time information of broadcasting programs according to channels included in the digital broadcasting program guidance data; and
detecting the digital broadcasting program guidance data according to channels, which include the broadcasting time information with the checked time, from the digital broadcasting program guidance data.

8. The method as claimed in claim 6, wherein the detecting step further comprises:
checking if the previously stored digital broadcasting program guidance data correspond to updated data before detecting the program guidance data according to channels; and
updating the digital broadcasting program guidance data when the digital broadcasting program guidance data do not correspond to the updated data.

9. The method as claimed in claim 8, wherein, in the updating step, each digital broadcasting channel is scanned, still images or dynamic images of a digital broadcasting program of the scanned channel are captured, and the image information of the stored digital broadcasting program guidance data is updated by means of the captured still images or dynamic images.

10. The method as claimed in claim 1, further comprising, outputting a broadcasting program of a predetermined channel when the predetermined channel is selected from the broadcasting program list according to channels.

11. The method as claimed in claim 10, wherein the outputting step further comprises reading and displaying detailed information of a broadcasting program currently broadcasted through the selected channel when the predetermined channel is selected from the broadcasting program list according to channels.

12. A method for displaying broadcasting channel information in a digital broadcasting reception apparatus, the method comprising the steps of:
receiving and storing digital broadcasting program guidance data including image information for digital broadcasting programs;
generating a broadcasting program list according to channels broadcasted at a current time by means of the digital broadcasting program guidance data when a request for broadcasting channel information is received from a user during output of digital broadcasting; and
displaying the generated broadcasting program list according to channels on a digital broadcasting output screen together with the image information.

13. The method as claimed in claim 12, wherein the image information includes thumbnail images of still images or dynamic images for each digital broadcasting program.

14. The method as claimed in claim 12, wherein the broadcasting program list according to channels, which includes the image information, includes at least one of a channel name, a program name, a broadcasting time and detailed information.

15. The method as claimed in claim 12, wherein, in the receiving and storing step, the digital broadcasting program guidance data including the image information are received and stored in each predetermined cycle.

16. The method as claimed in claim 12, wherein, in the receiving and storing step, the digital broadcasting program guidance data including the image information are received and stored at a user's request.

17. The method as claimed in claim 12, wherein, in the receiving and storing step, each digital broadcasting channel is scanned in each predetermined cycle, still images or dynamic images of a digital broadcasting program of the scanned channel are captured, and the image information of the digital broadcasting program guidance data is updated by means of the captured still images or dynamic images.

18. The method as claimed in claim 12, wherein the generating step further comprises:
checking a current time when the request for the broadcasting channel information is received from the user during the output of the digital broadcasting;
detecting digital broadcasting program guidance data according to channels, which include broadcasting time information with the checked time, from the previously stored digital broadcasting program guidance data; and
generating the broadcasting program list including the broadcasting time information with the checked time according to channels by means of the digital broadcasting program guidance data according to channels.

19. The method as claimed in claim 18, wherein the detecting step further comprises:
checking if the previously stored digital broadcasting program guidance data correspond to updated data before detecting the digital broadcasting program list according to channels; and
updating the digital broadcasting program guidance data when the digital broadcasting program guidance data do not correspond to the updated data.

20. The method as claimed in claim 18, wherein, in the displaying step, the generated broadcasting program list according to channels is displayed at a predetermined position of the digital broadcasting output screen through one of an On-Screen-Display (OSD) scheme and a Picture-In-Picture (PIP) scheme.

21. The method as claimed in claim 12, further comprising displaying a broadcasting program of the selected channel on a predetermined sub-screen of the digital broadcasting output screen when a predetermined channel is selected from the broadcasting program list according to channels.

22. The method as claimed in claim 21, wherein, in the displaying step, the broadcasting program of the selected channel is output to a predetermined position of the digital broadcasting output screen through either an OSD scheme or a PIP scheme.

23. The method as claimed in claim 21, further comprising displaying a broadcasting program of the selected channel on the main screen when a channel of the broadcasting program displayed on the sub-screen is selected while broadcasting programs of different channels are displayed on a main screen and the sub-screen.

24. The method as claimed in claim 21, further comprising displaying a broadcasting program of the selected channel on an entire screen when a channel of a broadcasting program displayed on a main-screen is selected while broadcasting programs of different channels are displayed on the main screen and the sub-screen.

25. The method as claimed in claim 12, further comprising:
detecting image information of digital broadcasting programs of the channels before or after a channel on the air from the digital broadcasting program list according to channels when a request for broadcasting information of channels before or after a channel on the air is received from a user during the output of the digital broadcasting; and
displaying the detected image information at a predetermined position of the digital broadcasting output screen.

26. The method as claimed in claim 25, further comprising displaying a broadcasting program of the selected channel on an entire screen when a channel of the displayed image information is selected.

27. The method as claimed in claim 25, further comprising periodically updating the displayed image information.

28. A digital broadcasting reception apparatus comprising:
a digital broadcasting receiver for receiving both digital broadcasting data and digital broadcasting program guidance data including image information of the digital broadcasting data;
a memory for storing the digital broadcasting program guidance data;
a controller for generating a broadcasting program list including image information for digital broadcasting programs according to channels by means of the digital broadcasting program guidance data; and
an output unit for displaying the broadcasting program list including the image information according to channels.

29. The digital broadcasting reception apparatus as claimed in claim 28, wherein the image information includes thumbnail images of still images or dynamic images for each digital broadcasting program.

30. The digital broadcasting reception apparatus as claimed in claim 28, wherein the broadcasting program list including the image information according to channels includes at least one of a channel name, a program name, a broadcasting time and detailed information.

31. The digital broadcasting reception apparatus as claimed in claim 28, wherein the controller receives the digital broadcasting program guidance data including the image information in each predetermined cycle, and stores the received the digital broadcasting program guidance data in the memory.

32. The digital broadcasting reception apparatus as claimed in claim 28, wherein the controller receives the digital broadcasting program guidance data including the image information at a user's request, and stores the received the digital broadcasting program guidance data in the memory.

33. The digital broadcasting reception apparatus as claimed in claim 28, wherein the controller generates a digital broadcasting program list according to channels, which includes broadcasting time information with a time when the broadcasting channel information has been requested, by means of the digital broadcasting program guidance data when a request for broadcasting channel information is received from a user.

34. The digital broadcasting reception apparatus as claimed in claim 33, wherein the controller checks if the stored digital broadcasting program guidance data correspond to updated data before generating the digital broadcasting program list according to channels, and updates the digital broadcasting program guidance data when the digital broadcasting program guidance data do not correspond to the updated data.

35. The digital broadcasting reception apparatus as claimed in claim 28, wherein the controller scans each digital broadcasting channel in each predetermined cycle, captures still images or dynamic images of a digital broadcasting program of the scanned channel, and updates the image information of the digital broadcasting program guidance data stored in the memory by means of the captured still images or dynamic images.

36. The digital broadcasting reception apparatus as claimed in claim 28, wherein, when a predetermined channel is selected from the displayed broadcasting program list according to channels, the controller outputs a broadcasting program of the selected channel through the output unit.

37. The digital broadcasting reception apparatus as claimed in claim 36, wherein, when a predetermined channel is selected from the broadcasting program list according to channels, the controller reads detailed information of a broadcasting program on the air through the selected channel, and displays the detailed information through the output unit.

38. The digital broadcasting reception apparatus as claimed in claim 36, wherein the controller generates a broadcasting program list according to channels broadcasted at a current time by means of the digital broadcasting program guidance data, and displays the generated broadcasting program list according to channels on a digital broadcasting output screen together with the image information when a request for broadcasting channel information is received from a user during output of digital broadcasting.

39. The digital broadcasting reception apparatus as claimed in claim 38, wherein the controller displays the generated broadcasting program list according to channels at a predetermined position of the digital broadcasting output screen through one of an OSD scheme and a PIP scheme.

40. The digital broadcasting reception apparatus as claimed in claim 38, wherein the controller displays a broadcasting program of a selected predetermined channel on a predetermined sub-screen of the digital broadcasting output screen when the predetermined channel is selected from the broadcasting program list according to channels.

41. The digital broadcasting reception apparatus as claimed in claim 40, wherein the controller displays a broadcasting program of a selected channel on the main screen when a channel of the broadcasting program displayed on the sub-screen is selected while broadcasting programs of different channels are displayed on a main screen and the sub-screen.

42. The digital broadcasting reception apparatus as claimed in claim 40, wherein the controller displays a broadcasting program of the selected channel on an entire screen when a channel of a broadcasting program displayed on a main-screen is selected while broadcasting programs of different channels are displayed on the main screen and the sub-screen.

43. The digital broadcasting reception apparatus as claimed in claim 36, wherein the controller detects image information of digital broadcasting programs of the channels before or after the channel on the air from the digital broadcasting program list according to channels, and displays the detected image information at a predetermined position of the digital broadcasting output screen when a request for broadcasting information of channels before or after a channel on the air is received from a user during output of digital broadcasting.

44. The digital broadcasting reception apparatus as claimed in claim 43, wherein the controller periodically updates and outputs the displayed image information.
